# FASCICULE DE BREVET EUROPEEN

(11) **EP 0 371 866 B1**
(45) Date de publication et mention de la délivrance du brevet: **30.06.1993**
(21) Numéro de dépôt: 89403275.4
(22) Date de dépôt: 27.11.1989
(51) Int. Cl.: A63B 37/14

(54) **Balle de golf**
Golfball
Golf ball

(30) Priorité: 29.11.1988 FR 8815568
(43) Date de publication de la demande: 06.06.1990
(73) Titulaire: Taylor Made Golf Company, Inc, Carlsbad, CA 92009 (US)
(72) Inventeur: Morell, Joseph, F-74490 Annecy-Le-Vieux (FR)
(74) Mandataire: Turlèque, Clotilde

(56) Documents cités:
- EP-A- 0 159 550
- FR-A- 735 555
- GB-A- 189 551
- GB-A- 2 216 017
- US-A- 4 762 326
- US-A- 4 772 026

## Description

La présente invention concerne une balle de golf, du type présentant une face périphérique ayant la forme générale d'une sphère et une pluralité de creux aménagés dans ladite face périphérique et définissant par leurs intersections avec celle-ci des cercles d'intersection répartis sur ladite face périphérique selon un motif répétitif déterminé par une subdivision de ladite face périphérique suivant des arcs de cercle centrés au centre de la sphère, et déterminés en fonction d'un cube inscrit dans la sphère, de façon à définir des surfaces élémentaires dans lesquelles lesdits cercles d'intersection sont répartis pour l'essentiel.

Une telle subdivision de la face périphérique d'une balle de golf et une telle répartition des cercles d'intersection sont décrites dans le brevet américain US-A-4 772 026 qui préconise une subdivision suivant six cercles équatoriaux, dont chacun passe par quatre sommets du cube et qui définissent vingt-quatre surfaces élémentaires identiques en forme de triangle isocèle sphérique.

Une autre balle de golf présentant également une répartition de cercles d'intersection de creux avec sa face périphérique pour l'essentiel à l'intérieur de surfaces élémentaires définies par des arcs de cercle équatoriaux est décrite dans le brevet américain US-A-4 762 326 qui, cependant, préconise une subdivision plus complexe puisqu'elle est déterminée en fonction d'un cube-octaèdre inscrit dans la sphère et met en oeuvre un total de sept cercles équatoriaux qui, outre qu'ils définissent six premières surfaces élémentaires identiques en forme de polygone régulier sphérique à quatre côtés et huit secondes surfaces élémentaires identiques en forme de triangle équilatéral sphérique, subdivisent chacune desdites premières surfaces élémentaires en quatre triangles rectangles isocèles, sphériques dans chacun desquels des cercles d'intersection de même diamètre se répartissent selon divers motifs.

Les divers motifs proposés dans le brevet américain US-A 4 762 326 manquent d'homogénéité en ce qu'ils laissent subsister entre les cercles d'intersection des plages de face périphérique sphérique présentant des formes et dimensions variables, réparties d'une façon telle qu'il est difficile de les discerner à moins d'un examen particulièrement attentif, si bien qu'il est difficile à un utilisateur d'orienter sa balle de façon à être certain de frapper celle-ci avec une probabilité importante d'atteindre la face périphérique de la balle dans des zones de cette face présentant une géométrie à peu près identique à chaque coup, pour assurer la reproduction des coups.

Le but de la présente invention est de remédier à cet inconvénient, en proposant un mode de subdivision de la face périphérique de la balle et un mode de répartition des cercles d'intersection des creux avec celle-ci propres à permettre à l'utilisateur d'être certain de frapper la balle dans une zone de géométrie connue, soit en lui permettant de discerner nettement cette répartition pour orienter à volonté sa balle et par conséquent la frapper dans une zone déterminée de conformation géométrique connue, soit en rendant cette répartition aussi uniforme que possible pour rendre alors la reproductibilité des coups à peu près indifférente à l'orientation de la balle.

A cet effet, la balle de golf selon l'invention, du type indiqué en préambule, se caractérise en ce que ladite subdivision est effectuée suivant quatre cercles équatoriaux dont chacun est axé sur un axe passant par deux sommets diamétralement opposés du cube de façon à définir six premières surfaces élémentaires identiques en forme de polygone régulier sphérique à quatre côtés et huit secondes surfaces élémentaires identiques en forme de triangle équilatéral sphérique, en ce que lesdits cercles d'intersection sont répartis pour l'essentiel à l'intérieur desdites premières et secondes surfaces élémentaires et en ce que, si l'on définit comme un arc de cercle diagonal d'une première surface élémentaire un arc de cercle centré au centre de la sphère et joignant deux sommets opposés dudit polygone régulier sphérique, certains desdits cercles d'intersection sont disposés sur lesdits arcs de cercle diagonaux.

En d'autres termes, des cercles d'intersection sont disposés sur certains des cercles équatoriaux définissant la subdivision caractéristique des enseignements du brevet américain US-A-4 762 326.

La répartition des cercles d'intersection pour l'essentiel à l'intérieur de surfaces élémentaires présentant des dimensions suffisamment grandes et un nombre suffisamment réduit pour qu'elles soient aisément discernables visuellement sur la balle permet à l'utilisateur d'orienter à volonté cette balle préalablement au coup, c'est-à-dire de s'assurer de ce que ce coup atteindra l'une ou l'autre des surfaces élémentaires dans une zone déterminée, par exemple dans une zone centrale de cette surface élémentaire, pour obtenir un effet recherché.

Cette différenciation visible des différentes surfaces élémentaires peut être accentuée par une différenciation sensible des diamètres respectifs et/ou des répartitions des cercles d'intersection situés respectivement dans les premières surfaces élémentaires et dans les secondes surfaces élémentaires, mais des essais ont démontré que même dans le cas de cercles présentant des diamètres respectifs sensiblement voisins dans les premières et secondes surfaces élémentaires, la discrimination visuelle entre ces dernières est aisée.

Cependant, il est également possible de donner aux cercles d'intersection situés dans les premières et secondes surfaces élémentaires des diamètres sensiblement voisins et de les répartir de façon sensiblement uniforme dans l'ensemble de ces surfaces élémentaires ; la différenciation visuelle de ces dernières devient plus difficile, mais l'orientation de la balle vis-à-vis du coup devient à peu près indifférente si bien que cette difficulté reste sans conséquence.

De préférence, les cercles d'intersection sont répartis selon un motif identique dans chacune des surfaces élémentaires identiques, c'est-à-dire dans les premières surfaces élémentaires identiques d'une part et dans les secondes surfaces élémentaires identiques d'autre part, mais on ne sortirait pas du cadre de la présente invention en prévoyant d'autres dispositions à cet égard, et notamment en prévoyant plusieurs motifs de disposition des cercles d'intersection dans des surfaces élémentaires identiques, pour offrir à l'utilisateur un choix entre diverses caractéristiques géométriques en ce qui concerne la zone qu'il va frapper.

La subdivision préconisée conformément à la présente invention présente par ailleurs un avantage en termes de facilité de fabrication de la balle. En effet, grâce à la subdivision préconisée, il est possible qu'au moins un cercle équatorial déterminé, parmi lesdits cercles équatoriaux, ne coupe aucun cercle d'intersection. Ce cercle déterminé peut correspondre à un plan de joint lorsque la balle est réalisée par assemblage de deux moitiés identiques ou lorsqu'au moins une couche superficielle de celle-ci, comprenant les creux, est réalisée par moulage en une seule pièce dans un moule lui-même formé de deux moitiés identiques assemblées ; on peut alors admettre que l'une des moitiés de la balle du moule, respectivement, soit décalée angulairement par rapport à l'autre moitié autour de l'axe du cercle équatorial déterminé précité en effet, soit la différenciation entre les différentes surfaces élémentaires est facilitée par une différence visuellement sensible de la répartition des cercles d'intersection et de leurs diamètres, auquel cas un tel décalage angulaire mutuel des deux moitiés de la balle ou du moule n'a pas d'influence quant à la possibilité pour l'utilisateur de choisir l'orientation de la balle, soit le motif de répartition des cercles d'intersection dans les différentes surfaces élémentaires et le choix d'un diamètre sensiblement uniforme de ces cercles d'intersection rendent l'orientation de la balle à peu près indifférente, et ce décalage angulaire reste également sans conséquence. Naturellement, ledit cercle équatorial déterminé subdivise chacun des autres desdits cercles équatoriaux en deux arcs de cercle, dont chacun correspond à l'un des deux hémisphères définis par ledit cercle équatorial déterminé et, dans le cas d'un tel décalage angulaire, les arcs de cercle équatorial de l'un des hémisphères sont décalés angulairement, par rapport aux arcs de cercle équatorial respectivement correspondants de l'autre des hémisphères, d'une même valeur autour de l'axe dudit cercle équatorial déterminé. Le fait d'admettre une telle disposition facilite considérablement la fabrication de la balle par assemblage de deux moitiés ou par moulage dans un moule formé de deux moitiés assemblées, puisqu'il n'est pas nécessaire d'effectuer un réglage précis de la position angulaire relative des deux moitiés de balle ou du moule, respectivement, à la fabrication de la balle.

Pour rendre plus homogène la répartition et la forme des plages de face périphérique sphérique subsistant entre les cercles d'intersection sur chacun des hémisphères définis par ledit cercle équatorial déterminé, on peut prévoir que la balle présente un cercle d'intersection autour de l'un, au moins, des points d'intersection desdits arcs de cercle équatorial et, de préférence, autour de chacun de ces points d'intersection respectivement.

Naturellement, on peut également prévoir qu'aucun des cercles équatoriaux ne coupe un cercle d'intersection.

D'autres caractéristiques et avantages d'une balle conforme à la présente invention ressortiront de la description ci-dessous, relative à trois exemples non limitatifs de mise en oeuvre, ainsi que des dessins annexes qui font partie intégrante de cette description.
- La figure 1 illustre la construction, conformément à la présente invention, de quatre cercles équatoriaux sur une sphère à partir d'un cube inscrit dans cette dernière.
- Les figures 2 à 4 montrent trois balles de golf dont les creux, ou plus précisément les cercles d'intersection de ces creux avec la face périphérique de la balle, sont répartis dans les surfaces élémentaires obtenues par cette subdivision au moyen de quatre cercles équatoriaux.
- La figure 5 montre une balle de golf dont les creux, ou plus précisément les cercles d'intersection de ces creux avec la face périphérique de la balle, sont répartis pour leur majorité dans les surfaces élémentaires obtenues par ladite subdivision au moyen de quatre cercles équatoriaux, et qui comporte en outre de tels creux ou cercles d'intersection respectivement autour de chacun des points d'intersection de deux arcs de trois desdits cercles équatoriaux résultant de la subdivision de ces trois cercles équatoriaux par le quatrième desdits cercles équatoriaux.
- La figure 6 montre une balle analogue à celle de la figure 5, si ce n'est que l'un des deux hémisphères définis par ledit quatrième cercle équatorial est décalé angulairement, autour de l'axe de ce cercle équatorial, par rapport à l'autre de ces deux hémisphères.

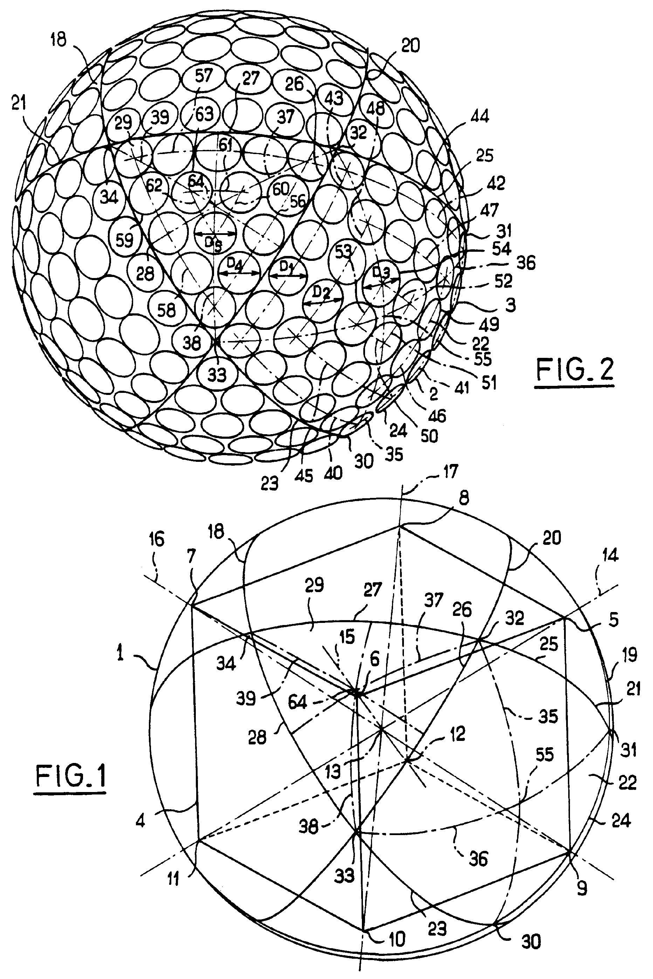

On se réfèrera en premier lieu à la figure 1, où l'on a désigné par 1 une sphère matérialisant la forme générale de la face périphérique 2, 102, 202, 302 de balles de golf 3, 103, 203, 303 illustrées respectivement aux figures 2, 3, 4, 5 et par 4 un cube inscrit dans cette sphère 1 sur laquelle il présente huit sommets 5 à 12 ; le cube 4 et la sphère 1 présentent un centre commun 13 qui servira de référence lorsque l'on fera appel, par la suite, à la notion de positions diamétralement opposées.

Pour des raisons géométriques, les sommets 5 à 12 du cube sont diamétralement opposés deux à deux et, conformément à la présente invention, on définit quatre axes 14, 15, 16, 17 dont chacun passe par deux sommets diamétralement opposés du cube 4, à savoir respectivement les sommets 5 et 11, 6 et 12, 7 et 9, 8 et 10.

Autour de chacun de ces axes 14 à 17 est tracé, sur la sphère 1, un cercle équatorial respectif 18, 19, 20, 21 dont chacun coupe les trois autres en deux points d'intersection.

On a fait apparaître aux figures 2 à 5, sur la face périphérique 2, 102, 202, 302 des balles 3, 103, 203, 303, les trois cercles équatoriaux 18, 20, 21 les plus visibles en raison de leur positionnement ; on remarquera toutefois qu'il n'est pas nécessaire que ces trois cercles équatoriaux, de même que le cercle équatorial 19, soient matérialisés sur la face 2, 102, 202, 302.

Quatre par quatre, les quatre cercles équatoriaux 18 à 21 définissent six surfaces élémentaires identiques 22, qui sont régulièrement réparties sur la sphère 1 et dont chacune présente la forme d'un polygone régulier sphérique à quatre côtés 23, 24, 25, 26, dont chacun est constitué par un arc d'un cercle équatorial respectif.

Trois par trois, les quatre cercles équatoriaux 18, 19, 20, 21 délimitent entre eux huit surfaces élémentaires identiques 29 en forme de triangle équilatérial sphérique, qui sont régulièrement réparties sur la sphère 1 et sont ainsi délimitées par trois côtés 26, 27, 28 dont chacun constitue un arc d'un cercle équatorial respectif ; on remarque que chaque côté de l'un des triangles équilatéraux sphériques 29 constitue également un côté d'un polygone régulier sphérique 22 respectif.

On a désigné respectivement par 30, 31, 32, 33 les quatre sommets d'un polygone régulier sphérique 22 ; chacun de ces sommets 30 à 33 est constitué par le point d'intersection de deux cercles équatoriaux 18 à 21 respectifs et est commun d'une part à un autre polygone régulier sphérique, à quatre côtés, respectif et d'autre part à deux triangles équilatéraux sphériques respectifs ; on a désigné par 32, 33, 34 les trois sommets d'un triangle équilatéral 29, lesquels sont définis de la même façon que les sommets d'un polygone régulier sphérique à quatre côtés 22.

On retrouve les surfaces élémentaires 22, 29, leurs côtés 23 à 26 et 26 à 28 et leurs sommets 30 à 33 et 32 à 34 aux figures 2, 3, 4, 5 où l'on a par ailleurs fait apparaître, de même qu'à la figure 1, deux arcs de cercle 35, 36 et trois arcs de cercle 37, 38, 39 de la sphère 1, sur le centre 13 de laquelle ces arcs de cercle sont centrés.

L'arc de cercle 35 joint les sommets opposés 30 et 32 du polygone régulier sphérique à quatre côtés 22, dont l'arc de cercle 36 joint les deux sommets opposés 31 et 33, si bien que l'on désignera par la suite ces arcs de cercle 35 et 36 comme des arcs de cercle diagonaux du polygone 22. De même, on a illustré en 37, 38, 39 trois arcs de cercle centrés au centre 13 de la sphère 1 et dont chacun relie un sommet respectif 32, 33, 34 d'un triangle équilatéral 29 au milieu du côté respectivement opposé de celui-ci 28, 27, 26 respectivement ; ces arcs de cercle 37, 38, 39 seront désignés par la suite comme des arcs de cercle médians de la surface élémentaire en forme de triangle équilatéral 29.

De façon connue en soi, dans la face périphérique, sphérique 2, 102, 202, 302 de la balle 3, 103, 203, 303 sont aménagés des creux qui présentent par exemple la forme de calottes sphériques et définissent des cercles par leur intersection avec cette face périphérique 2, 102, 202, 302.

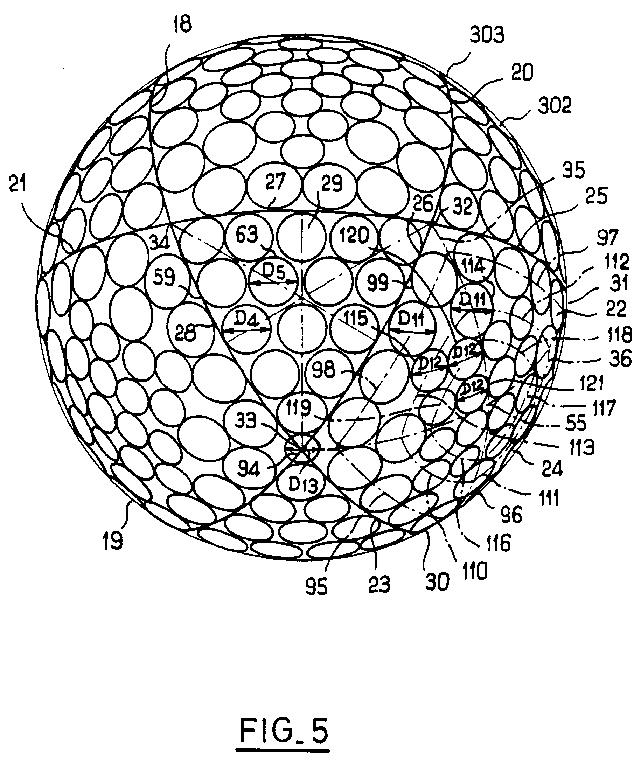

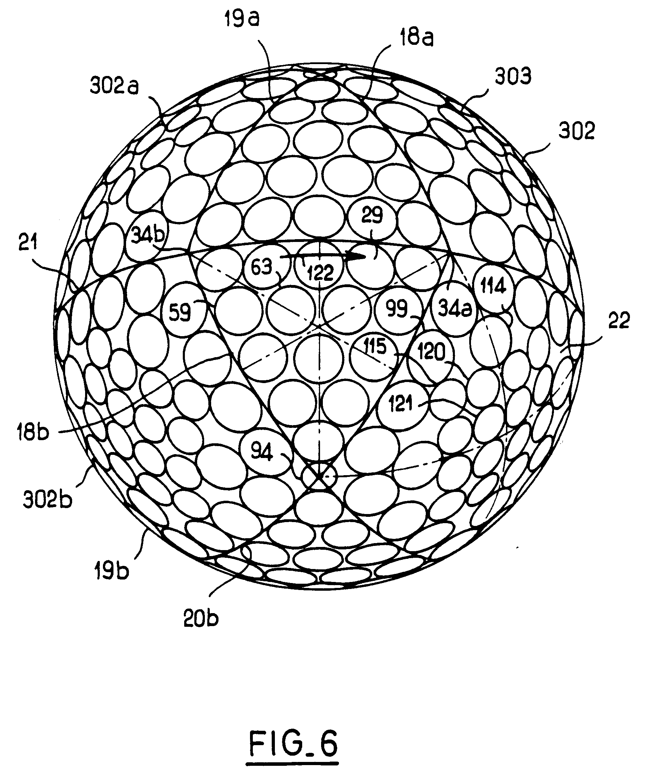

Conformément à la présente invention, les cercles d'intersection ainsi définis sont répartis intégralement (figures 2 à 4) ou au moins dans leur majorité (figure 5) suivant des motifs déterminés respectivement à l'intérieur des surfaces élémentaires 22 et à l'intérieur des surfaces élémentaires 29, sans chevauchement d'aucun des cercles équatoriaux dans les trois exemples illustrés bien qu'un tel chevauchement soit admissible dans une certaine mesure de préférence, toutefois, l'un au moins de ces cercles équatoriaux ne coupe aucun des cercles d'intersection des creux avec la face périphérique 2, 102, 202, 302 de la balle 3, 103, 203, 303 pour correspondre à un plan de joint entre deux moitiés de la balle si celle-ci est réalisée en deux moitiés, ou entre deux moitiés d'un moule destiné à la réalisation de la balle, ou au moins d'une couche superficielle de celle-ci comprenant les creux, en une seule pièce par moulage ; de façon non représentée aux figures 2 à 5 et comme on le décrira en référence à la figure 6, ce cercle équatorial déterminé peut alors subdiviser chacun des autres cercles équatoriaux en deux arcs de cercle équatorial mutuellement décalés angulairement, d'une même valeur, autour de l'axe de ce cercle équatorial, ce qui n'entraîne pas d'inconvénient majeur comme on l'a indiqué plus haut ; de préférence, et bien que l'on ne sorte pas du cadre de la présente invention en adoptant une disposition différente, le motif de répartition des creux, c'est-à-dire des cercles d'intersection de ces derniers avec la face périphérique de la balle, est identique d'une surface élémentaire 22 à l'autre, de même que le moitif de répartition des creux ou des cercles d'intersection dans les surfaces élémentaires 29 ; précisément, les quatre modes de mise en oeuvre de l'invention illustrés aux figures 2 à 5, respectivement, reprennent l'ensemble de ces dispositions préférées, d'une façon qui va être décrite à présent plus en détail.

On décrira en premier lieu le mode de mise en oeuvre de l'invention illustré à la figure 2.

Dans ce cas, dans chaque surface élémentaire 22, les cercles d'intersection des creux avec la face périphérique 2, sphérique, de la balle 3 se répartissent de la façon suivante :
- quatre rangées identiques 40, 41, 42, 43 de six cercles d'intersection 44 mutuellement identiques, c'est-à-dire d'un même diamètre D₁ choisi de telle sorte que les six cercles d'une même rangée soient adjacents deux à deux et adjacents à un côté 23, 24, 25, 26 de la surface élémentaire 22 respectivement voisin de la rangée 40, 41, 42, 43 à laquelle ces cercles 44 appartiennent, et de telle sorte que les cercles 44 d'extrémité de chacune des rangées, qui sont communs à une autre, respective, de ces rangées, soient centrés sur un arc de cercle diagonal respectif 35, 36 de la surface élémentaire 22 ; le diamètre D₁ peut être aisément déterminé, à cet effet, par un Homme du métier ;
- quatre rangées 45, 46, 47, 48 comportant chacune quatre cercles 49 identiques, c'est-à-dire de même diamètre D₂ supérieur au diamètre D₁ et choisi, de façon aisément déterminable par un Homme du métier, de telle sorte que dans chacune des rangées 45, 46, 47, 48, les cercles 49 soient adjacents deux à deux et, en outre, à un cercle 44 respectif d'une rangée 40, 41, 42, 43 respectivement voisine de la rangée 45, 46, 47, 48 à laquelle ils appartiennent, et que les cercles 49 extrêmes de chacune des rangées 45, 46, 47, 48, communs à deux de celles-ci, soient centrés sur un arc de cercle diagonal respectif 35, 36 de la surface élémentaire 22 ;
- quatre rangées 50, 51, 52, 53 dont chacune comporte deux cercles 54 de même diamètre D₃ supérieur au diamètre D₂ et choisi de telle sorte que les deux cercles de chaque rangée soient mutuellement adjacents, centrés sur un arc de cercle diagonal respectif 35, 36 de la surface élémentaire 22, et soient en outre adjacents à un cercle 49 d'une rangée 45, 46, 47, 48 respectivement voisine de la rangée 50, 51, 52, 53 à laquelle ils appartiennent.

On remarque que sur chacun des arcs de cercle diagonal 35, 36 de la surface élémentaire 22, les cercles d'intersection 44, 49, 54 sont répartis de façon identique, entre un sommet 30, 31, 32, 33 de la surface élémentaire 22 et un point 55 défini comme l'intersection des deux arcs de cercle diagonaux 35 et 36 ; le diamètre des cercles qui se succèdent ainsi de l'un des sommets 30, 31, 32, 33 jusqu'au point 55, ou encore de l'un des côtés 23, 24, 25, 26 jusqu'à ce point 55, va croissant, D₃ étant supérieur à D₂ lui-même supérieur à D₁ mais ces diamètres restant cependant sensiblement voisins.

De façon générale, dans ce qui précède comme dans ce qui suit, on entend par caractère "adjacent", à propos des cercles d'intersection d'un creux avec la face périphérique 2, 102, 202 de la balle 3, 103, 203, soit deux à deux, soit vis-à-vis d'un côté délimitant la surface élémentaire qui les contient pour l'essentiel, une relation tangentielle ou un écartement mutuel tel qu'il soit faible en regard du diamètre des cercles concernés, et par exemple au plus égal au quart de ce diamètre, ce chiffre étant indiqué à titre d'exemple non limitatif.

Dans chaque surface élémentaire 29, et dans le cas du mode de mise en oeuvre de l'invention qui a été illustré à la figure 2, les cercles d'intersection des creux avec la face périphérique 2 de la balle 3 se répartissent de la façon suivante :
- trois rangées 56, 57, 58 identiques de cinq cercles identiques 59, présentant le même diamètre D₄ du même ordre de grandeur que le diamètre D₂ des cercles 49, ce diamètre étant choisi de telle sorte que, dans chaque rangée 56, 57, 58, les cercles 59 soient mutuellement adjacents et soient adjacents à un côté 26, 27, 28 respectivement voisin de la rangée 56, 57, 58 à laquelle appartiennent ces cercles 59 ; en outre, les deux cercles extrêmes de chacune des rangées 56, 57, 58 sont centrés sur un arc de cercle médian 37, 38, 39 respectif de la surface élémentaire 29, et sont communs à deux des rangées 56, 57, 58 ;
- trois rangées 60, 61, 62 identiques comptant chacune deux cercles 63 identiques, de même diamètre D₅ sensiblement égal à D₄, ces deux cercles étant centrés sur l'un, respectif, des arcs de cercle médian 37, 38, 39 de la surface élémentaire 29 et ces cercles 63 étant mutuellement adjacents deux à deux ainsi qu'à quatre des cercles 59, appartenant à des rangées 56, 57, 58 différentes.

On remarque que, sur chacun des arcs de cercle médian 37, 38, 39, les cercles 59 et 63 sont répartis de façon identique, à raison d'un cercle 59 et d'un cercle 63 entre chacun des sommets 32, 33, 34 de la surface élémentaire 29 et un point 64 défini comme le point d'intersection des trois arcs de cercle médian 37, 38, 39 de cette surface, et d'un cercle 59 entre chacun des côtés 26, 27, 28 de la surface élémentaire 29 et ce point d'intersection 64.

Comme les diamètres D₁, D₂, D₃, les diamètres D₄ et D₅ peuvent être aisément déterminés par un Homme du métier, en fonction du diamètre de la face périphérique 2 de la balle 3.

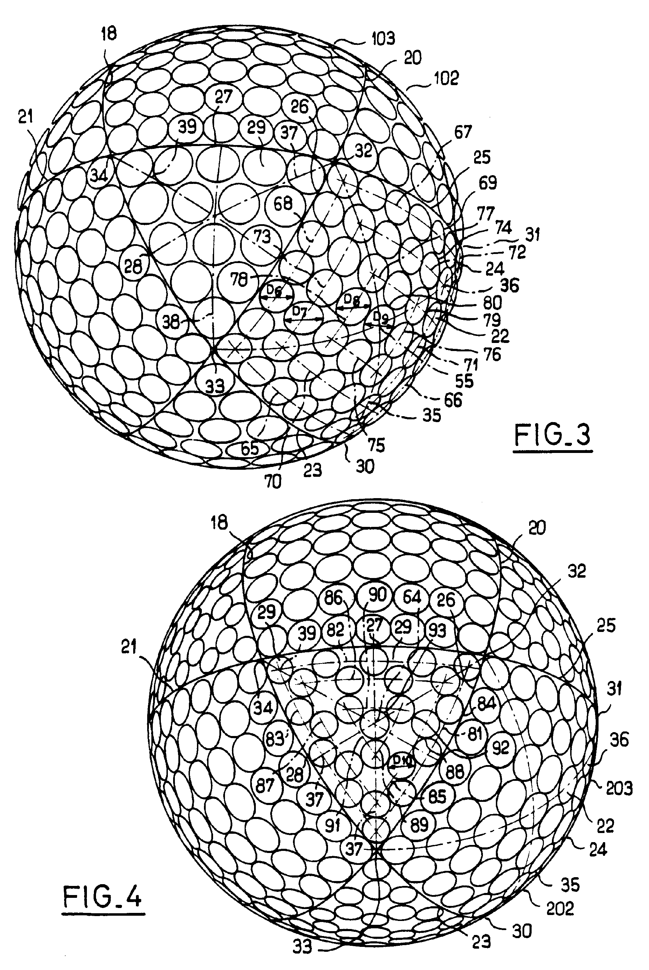

On décrira à présent plus en détail le mode de mise en oeuvre de l'invention qui a été illustré à la figure 3, où l'on retrouve la même répartition des cercles d'intersection des creux avec la face périphérique 102 de la balle 103 dans les surfaces élémentaires 29, en forme de triangle équilatéral, que dans le cas du mode de mise en oeuvre illustré à la figure 2 si bien que l'on ne décrira en référence à la figure 3 que le mode de répartition des cercles d'intersection des creux avec la face périphérique 102 de la balle 103 dans les surfaces élémentaires 22.

Dans une telle surface élémentaire 22, les cercles d'intersection se répartissent de la façon suivante :
- quatre rangées identiques 65, 66, 67, 68 de sept cercles d'intersection 69 mutuellement identiques, c'est-à-dire d'un même diamètre D₆ inférieur à D₁ et choisi de telle sorte que les sept cercles d'une même rangée soient adjacents deux à deux et adjacents à un côté 23, 24, 25, 26 de la surface élémentaire 22 respectivement voisin de la rangée 65, 66, 67, 68 à laquelle ces cercles 69 appartiennent, et de telle sorte que les cercles 69 d'extrémité de chacune des rangées, qui sont communs à une autre, respective, de ces rangées, soient centrées sur un arc de cercle diagonal respectif 35, 36 de la surface élémentaire 22 ; le diamètre D₆ peut être aisément déterminé, à cet effet, par un Homme du métier ;
- quatre rangées 70, 71, 72, 73 comportant chacune cinq cercles 74 identiques, c'est-à-dire de diamètre D₇ supérieur au diamètre D₆ et choisi, de façon aisément déterminable par un Homme du métier, de telle sorte que dans chacune des rangées 70, 71, 72, 73, les cercles 74 soient adjacents deux à deux et, en outre, à un cercle 69 respectif d'une rangée 65, 66, 67, 68 respectivement voisine de la rangée 70, 71, 72, 73 à laquelle ils appartiennent et que les cercles 74 extrêmes de chacune des rangées 70, 71, 72, 73, communs à deux de celles-ci, soient centrés sur un arc de cercle diagonal respectif 35, 36 de la surface élémentaire 22 ;
- quatre rangées 75, 76, 77, 78 dont chacune comporte trois cercles 79 de même diamètre D₈ supérieur au diamètre D₇ et choisi de telle sorte que les trois cercles de chaque rangée soient adjacents deux a deux, que chacun d'entre eux soit en outre, adjacent à un cercle 74 respectif d'une rangée 70, 71, 72, 73 respectivement voisine de la rangée à laquelle il appartient, et que les deux cercles 79 extrêmes de chacune des rangées 75, 76, 77, 78, communs à deux de celles-ci, soient centrés sur un arc de cercle diagonal respectif 35, 36 de la surface élémentaire 22 ;
- un cercle central 80 centré au point 55 et présentant un diamètre D₉ supérieur au diamètre D₈, lequel cercle 80 est adjacent à quatre cercles 79 appartenant respectivement aux quatre rangées 75, 76, 77, 78.

On remarquera que dans ce cas également, sur chacun des arcs de cercle diagonal 35, 36 de la surface élémentaire 22, les cercles d'intersection 69, 74, 79, 80 sont répartis de façon identique, entre un sommet 30, 31, 32, 33 de la surface élémentaire 22 et le point 55 d'intersection des deux arcs de cercle diagonaux 35 et 36 ; le diamètre des cercles qui se succèdent ainsi de l'un des sommets 30, 31, 32, 33 jusqu'au point 55, ou encore de l'un des côtés 23, 24, 25, 26 jusqu'à ce point 55, va croissant. Les diamètres D₆, D₇, D₈, D₉ peuvent être aisément déterminés par un Homme du métier, en fonction du diamètre de la balle 103.

On décrira à présent le mode de mise en oeuvre de l'invention qui a été illustré à la figure 4, lequel ne diffère du mode de mise en oeuvre illustré à la figure 3 que par le mode de répartition des cercles d'intersection des creux avec la face périphérique 202 de la balle 203 dans les surfaces élémentaires 29 en forme de triangle équilatéral, si bien que l'on ne décrira pas le mode de répartition des cercles d'intersection dans les surfaces élémentaires 22, lequel reste identique à celui qui a été décrit en référence à la figure 3.

Dans le cas du mode de mise en oeuvre illustré à la figure 4, les cercles d'intersection se répartissent de la façon suivante dans chacune des surfaces élémentaires 29 :
- trois rangées 81, 82, 83 identiques de cinq cercles identiques 84, présentant le même diamètre D₁₀ sensiblement inférieur au diamètre D₆ des cercles 69, ce diamètre D₁₀ étant choisi de telle sorte que, dans chaque rangée 81, 82, 83, les cercles 84 soient mutuellement disjoints mais soient adjacents à un côté 26, 27, 28 respectivement voisin de la rangée 81, 82, 83 à laquelle appartiennent ces cercles 84 ; en outre, les deux cercles 84 extrêmes de chacune des rangées 81, 82, 83 sont centrés sur un arc de cercle médian 37, 38, 39 respectif de la surface élémentaire 29, et sont communs à deux des rangées 81, 82, 83 ;
- trois rangées 85, 86, 87 identiques de quatre cercles identiques 88, présentant le même diamètre D₁₀ également choisi de telle sorte que, dans chaque rangée 85, 86, 87, les cercles 88 soient mutuellement disjoints mais soient adjacents à deux des cercles 69 de la rangée 81, 82, 83 respectivement voisine de la rangée 85, 86, 87 à laquelle appartiennent ces cercles 88 ; en outre, les deux cercles 88 extrêmes de chacune des rangées 85, 86, 87 sont centrés sur un arc de cercle médian 37, 38, 39 respectif de la surface élémentaire 29, et sont communs à deux des rangées 81, 82, 83 ;
- trois rangées 89, 90, 91 identiques comptant chacune deux cercles 92 identiques, de même diamètre D₁₀, ces deux cercles étant centrés sur l'un, respectif, des arcs de cercle médian 37, 38, 39 de la surface élémentaire 29 et ces cercles 92 étant mutuellement disjoints mais adjacents à deux, respectifs, des cercles 88, appartenant à deux rangées 85, 86, 87 différentes ;
- un cercle central 93 de même diamètre D₁₀, centré au point 64 et adjacent aux trois cercles 92.

On remarquera que, sur chacun des arcs de cercle médian 37, 38, 39, les cercles 84, 88, 92, 93 sont répartis de façon identique, à raison d'un cercle 84, d'un cercle 88 et d'un cercle 92 entre chacun des sommets 32, 33, 34 de la surface élémentaire 29 et le cercle central 93, et d'un cercle 84 entre chacun des côtés 26, 27, 28 de la surface élémentaire 29 et ce cercle central 93.

Comme les diamètres D₁ à D₉, le diamètre D₁₀ peut être aisément déterminé par un Homme du métier, en fonction du diamètre de la face périphérique 2 de la balle 3.

On décrira à présent le mode de mise en oeuvre de l'invention qui a été illustré à la figure 5, lequel ne diffère des modes de mise en oeuvre illustrés aux figures 2 et 3, que d'une part, par le mode de répartition des cercles d'intersection des creux avec la face périphérique 302 de la balle 303 dans les surfaces élémentaires 22, si bien que l'on ne décrira pas le mode de répartition des cercles d'intersection dans les surfaces élémentaires 29, lequel reste identique à celui qui a été décrit en référence à la figure 2, et, d'autre part, par la présence de cercles d'intersection supplémentaires 94 autour des intersections mutuelles des cercles équatoriaux 18, 19, 20 alors que de tels cercles d'intersection restent absents de toute intersection de ces cercles équatoriaux 18, 19, 20 avec le cercle équatorial 21, choisi pour correspondre à un plan de joint lors de la fabrication de la balle 303 ; seul l'un de ces cercles d'intersection supplémentaires 94 est visible à la figure 5, en pratique autour du point d'intersection des cercles équatoriaux 18 et 20 correspondant au sommet 33 d'une surface élémentaire 29 alors que les sommets 32 et 34 de celle-ci, situés sur le cercle équatorial 21, sont démunis de tels cercles d'intersection; ce cercle d'intersection supplémentaire 94 présente un diamètre D₁₃ inférieur aux diamètres D₄ et D₅ des cercles d'intersection 59 et 63 d'une surface élémentaire 29 et choisi, de façon aisément déterminable par un Homme du métier, de telle sorte que ce cercle 94 soit adjacent à deux cercles 59 appartenant à deux surfaces élémentaires 29 différentes.

Un Homme du métier déduira aisément, de la disposition du cercle d'intersection supplémentaire 94 illustré, la façon dont des cercles d'intersection supplémentaires analogues à celui-ci sont disposés respectivement autour de chacun des points d'intersection de deux des cercles équatoriaux 18, 19, 20. Au moins certains de ces cercles d'intersection supplémentaires pourraient être omis, auquel cas subsisterait autour dudit point d'intersection respectivement correspondant une plage de la surface sphérique 302 de la balle 303 utilisable par exemple pour recevoir un marquage du fabricant ; naturellement, de tels cercles d'intersection supplémentaires pourraient également être totalement absents, de même que l'on pourrait également en prévoir en adoptant dans les surfaces élémentaires 22 et 29 des dispositions de cercles élémentaires différentes de celles qui ont été illustrées à la figure 5.

Dans le cas de ce mode de mise en oeuvre de l'invention, les cercles d'intersection se répartissent de la façon suivante dans chaque surface élémentaire 22 :
- quatre rangées identiques 95, 96, 97, 98 de quatre cercles d'intersection 99 mutuellement identiques, c'est-à-dire d'un même diamètre D₁₁ supérieur à D₁ et à D₆ ainsi qu'à D₄ et D₅ et choisi de telle sorte que les quatre cercles d'une même rangée soient adjacents deux à deux et adjacents à un côté 23, 24, 25, 26 de la surface élémentaire 22 respectivement voisin de la rangée 95, 96, 97, 98 à laquelle ces cercles 99 appartiennent, et de telle sorte que les cercles 99 d'extrémité de chacune des rangées soient adjacents à un arc de cercle diagonal respectif 35, 36 de la surface élémentaire 22 ; le diamètre D₁₁ peut être aisément déterminé, à cet effet, par un Homme du métier ;
- quatre rangées 110, 111, 112, 113 comportant chacune trois cercles mutuellement disjoints à raison de deux cercles extrêmes 114 de même diamètre D₁₁ que les cercles 99 des rangées 95, 96, 97, 98 et d'un cercle central 115 de diamètre D₁₂ inférieur à D₁₁ ainsi qu'à D₄ et D₅ mais supérieur à D₁₃ et choisi de telle sorte que dans chacune des rangées 110, 111, 112, 113, le cercle central 115 soit adjacent à deux cercles intermédiaires 99 respectifs d'une rangée 95, 96, 97, 98 respectivement voisine de la rangée 110, 111, 112, 113 à laquelle ils appartiennent alors que les cercles 114 extrêmes de chacune des rangées 110, 111, 112, 113, communs à deux de celles-ci, sont centrés sur un arc de cercle diagonal respectif 35, 36 de la surface élémentaire 22 et adjacents à deux cercles 99 dont chacun constitue un cercle extrême de l'une des rangées 95, 96, 97, 98 ;
- quatre rangées 116, 117, 118, 119 dont chacune comporte deux cercles 120 de même diamètre D₁₂ que les cercles centraux 115 des rangées 110, 111, 112, 113 et choisi de telle sorte que les deux cercles 120 de chaque rangée, mutuellement disjoints, soient chacun adjacents à un cercle extrême 114 respectif d'une rangée 70, 71, 72, 73 respectivement voisine de la rangée à laquelle il appartient ainsi qu'au cercle central 115 de cette rangée voisine, et que les deux cercles 120 soient adjacents à un arc de cercle diagonal respectif 35, 36 de la surface élémentaire 22 ;
- quatre cercles 121 dont chacun présente le même diamètre D₁₂ que les cercles 115 et 120 et est adjacent d'une part aux deux cercles 120 d'une rangée 116, 117, 118, 119 respectivement voisine et d'autre part aux deux arcs de cercle diagonal 35, 36 de la surface élémentaire 22 ; la détermination, aux différents effets ci-dessus, du diamètre D₁₂ ressort des aptitudes normales d'un Homme du métier.

On remarquera que dans ce cas également, sur chacun des arcs de cercle diagonal 35, 36 de la surface élémentaire 22, les cercles d'intersection 114 sont disposés de façon identique, entre un sommet 30, 31, 32, 33 de la surface élémentaire 22 et le point 55 d'intersection des deux arcs de cercle diagonaux 35 et 36.

La figure 6 illustre une balle de golf 303 dont la face périphérique 302 est subdivisée selon une variante des subdivisions illustrées aux figures 1 à 5, cette variante créant toutefois des surfaces élémentaires 22 et 29 de même forme que dans le cas des subdivisions illustrées aux figures 1 à 5.

Cette variante de subdivision est construite géométriquement comme on l'a décrit en référence à la figure 1 si ce n'est qu'après avoir défini les cercles équatoriaux 18 à 21 et subdivisé par le cercle équatorial 21 chacun des autres cercles équatoriaux 18, 19, 20 en deux arcs de cercle, respectivement 18a et 18b, 19a et 19b, 20a et 20b, propres à chacun des hémisphères 2a, 2b définis par le cercle équatorial 21, respectivement, on décale angulairement tous les arcs de cercle équatoriaux de l'un de ces hémisphères d'une même valeur, autour de l'axe 17 du cercle équatorial 21, et dans un même sens 122, si bien que la subdivision de chaque hémisphère 2a, 2b en surfaces élémentaires 20 et 29 reste inchangée par rapport à ce qui a été décrit en référence à la figure 5 ; toutefois, les deux arcs d'un même cercle équatorial 18, 19, 20 ne se rejoignent plus sur le cercle équatorial 21 mais si, comme on l'a illustré à la figure 6, la valeur du décalage angulaire relatif des deux hémisphères 2a et 2b est de 60°, en un point 34a situé sur le cercle 21 se rejoignent par exemple les arcs de cercles équatoriaux 18a et 20b alors qu'en un point 34b également situé sur le cercle 21, décalé de 60° en référence au sens 72 par rapport au point 34a, se rejoignent dans cet exemple les arcs de cercles équatoriaux 19a et 18b.

Dans le cas de cette variante, on retrouve à l'identique sur chaque hémisphères 2a ou 2b, non seulement les cercles d'intersection 59, 63, 99, 114, 115, 120, 121 répartis dans les surfaces élémentaires 22 et 29 comme on l'a décrit en référence à la figure 5, mais également les cercles d'intersection supplémentaires 94 situés autour de chacun des points d'intersection respectifs de deux des arcs de cercles équatoriaux 18a, 19a, 20a (non visible à la figure 3) sur l'hémisphère 2a et 18b, 19b, 20b sur l'hémisphère 2b, étant entendu que toute autre répartition notamment du type décrit en référence à chacune des figures 2 à 4 respectivement pourrait être adoptée sans que l'on sorte pour autant du cadre de la présente invention.

On remarque que, dans chacun des modes de mise en oeuvre de l'invention qui viennent d'être décrits et plus particulièrement dans ceux qui ont été décrits en référence aux figures 3 à 6, l'orientation de la balle peut être aisément visualisée, pour permettre à l'utilisateur de choisir d'orienter l'une des surfaces élémentaires 22 ou l'une des surfaces élémentaires 29 vers l'impact, avec un caractère relativement indifférent de la zone de la surface élémentaire choisie qui reçoit effectivement l'impact en raison de la bonne homogénéité de répartition des cercles d'intersection dans chacune des surfaces élémentaires ; en outre, dans le cas du mode de mise en oeuvre illustré à la figure 2, l'homogénéité de répartition des cercles d'intersection entre les différentes surfaces élémentaires et de leurs diamètres est suffisamment bonne pour que l'on puisse considérer que l'orientation de la balle vis-à-vis de l'impact est à peu près indifférente.

## Revendications

1. Balle de golf, de type présentant une face périphérique (2, 102, 202, 302) ayant la forme générale d'une sphère (1) et une pluralité de creux aménagés dans ladite face périphérique (2, 102, 202, 302) et définissant par leurs intersections avec celle-ci des cercles d'intersection (44, 49, 54, 59, 63, 69, 74, 79, 80, 84, 88, 92, 93, 94, 99, 114, 115, 120, 121) répartis sur ladite face périphérique (2, 102, 202, 302) selon un motif répétitif déterminé par une subdivision de ladite face périphérique (2, 102, 202, 302) suivant des arcs de cercle (18, 19, 20, 21) centrés au centre (13) de la sphère (1) et déterminés en fonction d'un cube (4) inscrit dans la sphère (1), de façon à définir des surfaces élémentaires (22, 29) dans lesquelles lesdits cercles d'intersection (44, 49, 54, 59, 63, 69, 74, 79, 80, 84, 88, 92, 93, 94, 99, 114, 115, 120, 121) sont répartis pour l'essentiel,
caractérisée en ce que ladite subdivision est effectuée suivant quatre cercles équatoriaux (18, 19, 20, 21) dont chacun est axé sur un axe (14, 15, 16, 17) passant par deux sommets (5, 6, 7, 8, 9, 10, 11, 12) diamétralement opposés du cube (4) de façon à définir six premières surfaces élémentaires identiques (22) en forme de polygone régulier sphérique à quatre côtés (23, 24, 25, 26) et huit secondes surfaces élémentaires identiques (29) en forme de triangle équilatéral sphérique, en ce que lesdits cercles d'intersection (44, 49, 54, 59, 63, 69, 74, 79, 80, 84, 88, 92, 93, 94, 99, 114, 115, 120, 121) sont répartis pour l'essentiel à l'intérieur desdites premières et secondes surfaces élémentaires (22, 29), et en ce que, si l'on définit comme un arc de cercle diagonal d'une première surface élémentaire (22) un arc de cercle (35, 36) centré au centre (13) de la sphère (1) et joignant deux sommets (30, 31, 32, 33) opposés dudit polygone régulier sphérique, certains (44, 49, 54, 69, 74, 79, 80, 114) desdits cercles d'intersection (44, 49, 54, 59, 63, 69, 74, 79, 80, 84, 88, 92, 93, 94, 99, 114, 115, 120, 121) sont disposés sur lesdits arcs de cercle diagonaux (36, 36).

2. Balle selon la revendication 1, caractérisée en ce qu'au moins un cercle équatorial déterminé (21), parmi lesdits cercles équatoriaux (18, 19, 20, 21), ne coupe aucun cercle d'intersection (44, 49, 54, 59, 63, 69, 74, 79, 80, 84, 88, 92, 93, 94, 99, 114, 115, 120, 121) et subdivise chacun des autres desdits cercles équatoriaux (18, 19, 20, 21) en deux arcs de cercle équatorial (18a et 18b, 19a et 19b, 20a et 20b), dont chacun correspond à l'un des deux hémisphères (2a, 2b) définis par ledit cercle équatorial déterminé (21).

3. Balle selon la revendication 2, caractérisée en ce que les arcs de cercle équatorial (18a, 19a, 20a) de l'un (2a) des hémisphères sont décalés angulairement, par rapport aux arcs de cercle équatorial respectivement correspondants (18b, 19b, 20b) de l'autre (2b) des hémisphères, d'une même valeur autour de l'axe (17) dudit cercle équatorial déterminé (21).

4. Balle selon l'une quelconque des revendications 2 et 3, caractérisée en ce qu'aucun desdits cercles équatoriaux (18, 19, 20, 21) ne coupe un cercle d'intersection (44, 49, 54, 59, 63, 69, 74, 79, 80, 84, 88, 92, 93, 94, 99, 114, 115, 120, 121).

5. Balle selon l'une quelconque des revendications 2 et 3, caractérisée en ce qu'elle présente un cercle d' intersection (94) autour de l'un, au moins, des points d'intersection (33) desdits arcs de cercle équatorial (18a, 19a, 20a, 18b, 19b, 20b).

6. Balle selon l'une quelconque des revendications 2 et 3, caractérisée en ce qu'elle présente un cercle d'intersection (94) autour de chacun des points d'intersection (33) desdits arcs de cercle équatorial (18a, 19a, 20a, 18b, 19b, 20b), respectivement.

7. Balle selon l'une quelconque des revendications 1 à 6, caractérisée en ce que des cercles d'intersection (44, 49, 54, 59, 63, 69, 74, 79, 80, 84, 88, 92, 93, 99, 114, 115, 120, 121) sont répartis selon un motif identique dans des surfaces élémentaires (22, 29) identiques.

8. Balle selon l'une quelconque des revendications 1 à 7, caractérisée en ce que lesdits cercles d'intersection (44, 49, 54, 69, 74, 79, 80, 99, 114, 115, 120, 121) sont répartis, dans une première surface élémentaire (22), selon un motif comportant :
- des premiers cercles d'intersection répartis de façon identique sur lesdits arcs de cercle diagonaux (35, 36),
- des deuxièmes cercles d'intersection répartis en rangées (40, 41, 42, 43, 45, 46, 47, 48, 50, 51, 52, 65, 66, 67, 68, 70, 71, 72, 73, 75, 76, 77, 78, 110, 111, 112, 113) dont chacune relie mutuellement deux premiers cercles d'intersection occupant des positions identiques sur lesdits arcs de cercle diagonaux (35, 36) correspondants

9. Balle selon la revendication 8, caractérisée en ce que deux premiers cercles d'intersection occupant des positions identiques sur lesdits arcs de cercle diagonaux (35, 36) correspondants, dans une première surface élémentaire (22), présentent le même diamètre (D₁, D₂, D₃, D₆, D₇, D₈, D₉, D₁₁.

10. Balle selon l'une quelconque des revendications 8 et 9, caractérisée en ce que deux rangées (40, 41, 42, 43, 45, 46, 47, 48, 50, 51, 52, 65, 66, 67, 68, 70, 71, 72, 73, 75, 76, 77, 78, 110, 111, 112, 113) occupant des positions identiques dans une première surface élémentaire (22) sont identiques.

11. Balle selon l'une quelconque des revendications 8 à 10, caractérisée en ce que les cercles d'intersection (44, 49, 54, 69, 74, 79, 80) d'une même rangée (40, 41, 42, 43, 45, 46, 47, 48, 50, 51, 52, 65, 66, 67, 68, 70, 71, 72, 73, 75, 76, 77, 78), dans une première surface élémentaire (22), présentent le même diamètre (D₁, D₂, D₃, D₆, D₇, D₈, D₉).

12. Balle selon la revendication 11, caractérisée en ce que les cercles d'intersection (44, 49, 54, 69, 74, 79, 80) présentent un diamètre (D₁, D₂, D₃, D₆, D₇, D₈, D₉) d'autant plus grand qu'ils sont plus éloignés d'un cercle équatorial (18, 19, 20, 21) dans une première surface élémentaire (22).

13. Balle selon l'une quelconque des revendications 8 à 10, caractérisée en ce que les cercles d'intersection (114, 115) d'une même rangée (110, 111, 112, 113), dans une première surface élémentaire (22), présentent des diamètres respectifs différents (D₁₁, D₁₂).

14. Balle selon la revendication 13, caractérisée en ce que les deuxièmes cercles d'intersection (115) présentent un diamètre (D₁₂) inférieur à celui des premiers cercles d'intersection (114) situés dans la même rangée (110, 111, 112, 113).

15. Balle selon l'une quelconque des revendications 8 à 14, caractérisée en ce que ledit motif comporte en outre des troisièmes cercles d'intersection (99, 120, 121) répartis en rangées (95, 96, 97, 98, 116, 117, 118, 119) dont chacune comporte deux cercles d'intersection extrêmes (99, 120) adjacents à un arc de cercle diagonal respectif (35, 36).

16. Balle selon la revendication 15, caractérisée en ce que les troisièmes cercles d'intersection (99, 120, 121) d'une même rangée (95, 96, 97, 98, 116, 117, 118, 119) présentent le même diamètre (D₁₂).

17. Balle selon l'une quelconque des revendications 1 à 16, caractérisée en ce qu'un cercle d'intersection (80) est disposé à l'intersection (55) desdits arcs de cercle diagonaux (35, 36) dans une première surface élémentaire (22).

18. Balle selon l'une quelconque des revendications 1 à 17, caractérisée en ce que, si l'on définit comme un arc de cercle médian d'une seconde surface élémentaire (29) un arc de cercle (37, 38, 39) centré au centre (13) de la sphère (1) et joignant un sommet (32, 33, 34) dudit triangle équilatéral sphérique au milieu du côté (26, 27, 28) de ce triangle équilatéral sphérique opposé à ce sommet (32, 33, 34), lesdits cercles d'intersection (59, 63, 84, 88, 92, 93) sont répartis, dans une seconde surface élémentaire (29), selon un motif comportant :
- des quatrièmes cercles d'intersection répartis de façon identique sur lesdits arcs de cercle médian (37, 38, 39),
- des cinquièmes cercles d'intersection répartis en rangées (56, 57, 58, 60, 61, 62, 81, 82, 83, 85, 86, 87, 89, 90, 91) dont chacune relie mutuellement deux quatrièmes cercles d'intersection occupant des positions identiques sur lesdits arcs de cercle médian (37, 38, 39) correspondants.

19. Balle selon la revendication 18, caractérisée en ce que deux quatrièmes cercles d'intersection occupant des positions identiques sur lesdits arcs de cercles médian (37, 38, 39) correspondants, dans une seconde surface élémentaire (29), présentent le même diamètre (D₄, D₅, D₁₀).

20. Balle selon l'une quelconque des revendications 18 et 19, caractérisée en ce que deux rangées (56, 57, 58, 60, 61, 62, 81, 82, 83, 85, 86, 87, 89, 90, 91) occupant des positions identiques dans une seconde surface élémentaire (29) sont identiques.

21. Balle selon l'une quelconque des revendications 18 à 20, caractérisée en ce que les cercles d'intersection (59, 63, 84, 88, 92, 93) d'une même rangée (56, 57, 58, 60, 61, 62, 81, 82, 83, 85, 86, 87, 89, 90, 91), dans une seconde surface élémentaire (29), présentent le même diamètre (D₄, D₅, D₁₀).

22. Balle selon l'une quelconque des revendications 18 à 21, caractérisée en ce qu'un cercle d'intersection (93) est disposé à l'intersection (64) desdits arcs de cercle médian (37, 38, 39) dans une seconde surface élémentaire (29).

23. Balle selon l'une quelconque des revendications 18 à 22, caractérisée en ce que les cercles d'intersection (59, 63, 84, 88, 92, 93) présentent le même diamètre (D₄, D₅, D₁₀) dans une seconde surface élémentaire (29).

24. Balle selon l'une quelconque des revendications 1 à 23, caractérisée en ce que les cercles d'intersection (44, 49, 54, 59, 63, 69, 74, 79, 80, 84, 88, 92, 93, 99, 114, 115, 120, 121) correspondant respectivement aux premières surfaces élémentaires (22) et aux secondes surfaces élémentaires (29) présentent des diamètres (D₁ à D₁₂) sensiblement différents et/ou des répartitions sensiblement différentes respectivement dans les premières et secondes surfaces élémentaires (22, 29).

25. Balle selon l'une quelconque des revendications 1 à 23, caractérisée en ce que les cercles d'intersection (44, 49, 52, 59, 63) correspondant aux premières et secondes surfaces élémentaires (22, 29) présentent des diamètres (D₁ à D₅) sensiblement voisins et des répartitions sensiblement uniformes dans lesdites premières et secondes surfaces élémentaires (22, 29).

## Patentansprüche

1. Golfball vom Typ, der eine Umfangsfläche (2, 102, 202, 302) aufweist, die die generelle Form einer Kugel (1) und eine Vielzahl von Ausnehmungen aufweist, die in der Umfangsfläche (2, 102, 202, 302) angeordnet sind und durch ihre Durchschneidung mit dieser Schnittkreise (44, 49, 54, 59, 63, 69, 74, 79, 80, 84, 88, 92, 93, 94, 99, 114, 115, 120, 121) definieren, die auf der Umfangsfläche (2, 102, 202, 302) gemäß einem bestimmten sich wiederholenden Muster verteilt sind, das durch eine Unterteilung der Umfangsfläche (2, 102, 202, 302) gemäß Kreisbögen (18, 19, 20, 21) bestimmt ist, die im Zentrum (13) der Kugel (1) zentriert und in Abhängigkeit eines in der Kugel (1) eingeschriebenen Kubusses (4) festgelegt sind, um elementare Oberflächen (22, 29) zu definieren, in denen die Schnittkreise (44, 49, 54, 59, 63, 69, 74, 79, 80, 84, 88, 92, 93, 94, 99, 114, 115, 120, 121) im wesentlichen verteilt sind,
dadurch **gekennzeichnet,** daß
die Unterteilung gemäß äquatorialen Kreisen (18, 19, 20, 21) durchgeführt ist, von denen jeder auf einer Achse (14, 15, 16, 17) ausgerichtet ist, die durch zwei diametral entgegengesetzte Scheitel (5, 6, 7, 8, 9, 10, 11, 12) des Kubusses (4) verläuft, um sechs erste identische elementare Oberflächen (22) in Form eines regelmäßigen sphärischen Polygons mit vier Seiten (23, 24, 25, 26) und acht zweite identische elementare Oberfläche (29) in Form eines gleichzeitigen sphärischen Dreiecks zu bestimmen, daß die Schnittkreise (44, 49, 54, 59, 63, 69, 74, 79, 80, 84, 88, 92, 93, 94, 99, 114, 115, 120, 121) im wesentlichen innerhalb der ersten und zweiten elementaren Oberflächen (22, 29) verteilt sind, und daß, wenn man als einen diagonalen Kreisbogen einer ersten elementaren Oberfläche (22) einen Kreisbögen (35, 36) definiert, der im Zentrum (13) der Kugel (1) zentriert ist und zwei entgegengesetzte Scheitel (30, 31, 32, 33) des sphärischen regelmäßigen Polygons verbindet, sind bestimmte (44, 49, 54, 69, 74, 79, 80, 114) der Schnittkreise (44, 49, 54, 59, 63, 69, 74, 79, 80, 84, 88, 92, 93, 94, 99, 114, 115, 120, 121) auf den diagonalen Kreisbögen (35, 36) angeordnet.

2. Ball nach Anspruch 1, dadurch gekennzeichnet, daß mindestens ein bestimmter äquatorialer Kreis (21) unter den äquatorialen Kreisen (18, 19, 20, 21) keinen Schnittkreis (44, 49, 54, 59, 63, 69, 74, 79, 80, 84, 88, 92, 93, 94, 99, 114, 115, 120, 121) schneidet und jeder der anderen äquatorialen Kreise (18, 19, 20, 21) in zwei äquatoriale Kreisbögen (18a und 18b, 19a und 19b, 20a und 20b) unterteilt, von denen jeder einer der beiden Halbkugeln (2a, 2b) entspricht, die durch den bestimmten äquatorialen Kreis (21) definiert sind.

3. Ball nach Anspruch 2, dadurch gekennzeichnet, daß die äquatorialen Kreisbögen (18a, 19a, 20a) von einem (2a) der Halbkugeln bezüglich den jeweiligen entsprechenden äquatorialen Kreisbögen (18b, 19b, 20b) der anderen (2b) der Halbkugeln um einen gleichen Wert um die Achse (17) des bestimmten äquatorialen Kreises (21) versetzt sind.

4. Ball nach einem der Ansprüche 2 und 3, dadurch gekennzeichnet, daß keiner der äquatorialen Kreise (18, 19, 20, 21) einen Schnittkreis (44, 49, 54, 59, 63, 69, 74, 79, 80, 84, 88, 92, 93, 94, 99, 114, 115, 120, 121) schneidet.-

5. Ball nach einem der Ansprüche 2 und 3, dadurch gekennzeichnet, daß er einen Schnittkreis (94) um mindestens einen der Schnittpunkte (33) der äquatorialen Kreisbögen (18a, 19a, 20a, 18b, 19b, 20b) aufweist.

6. Ball nach einem der Ansprüche 2 und 3, dadurch gekennzeichnet, daß er einen Schnittkreis (94) um jeden der Schnittpunkte (33) der jeweiligen äquatorialen Kreisbögen (18a, 19a, 20a, 18b, 19b, 20b) aufweist.

7. Ball nach einem der Ansprüche 1 bis 6, dadurch gekennzeichnet, daß die Schnittkreise (44, 49, 54, 59, 63, 69, 74, 79, 80, 84, 88, 92, 93, 99, 114, 115, 120, 121) gemäß einem identischen Muster in identischen elementaren Oberflächen (22, 29) verteilt sind.

8. Ball nach einem der Ansprüche 1 bis 7, dadurch gekennzeichnet, daß die Schnittkreise (44, 49, 54, 69, 74, 79, 80, 99, 114, 115, 120, 121) in einer ersten elementaren Oberfläche (22) gemäß einem Muster verteilt sind, das aufweist:
- erste Schnittkreise, die auf den diagonalen Kreisen (35, 36) auf identische Weise verteilt sind,
- zweite Schnittkreise, die in Reihen (40, 41, 42, 43, 45, 46, 47, 48, 50, 51, 52, 65, 66, 67, 68, 70, 71, 72, 73, 75, 76, 77, 78, 110, 111, 112, 113) verteilt sind, von denen jede zwei erste Schnittkreise gegenseitig verbindet, die identische Positionen auf den entsprechenden diagonalen Kreisen (35, 36) einnehmen.

9. Ball nach Anspruch 8, dadurch gekennzeichnet, daß zwei erste Schnittkreise, die identische Positionen auf den entsprechenden, diagonalen Kreisen (35, 36) einnehmen, in einer ersten elementaren Oberfläche (22) den gleichen Durchmesser (D₁, D₂, D₃, D₆, D₇, D₈, D₉, D₁₁) aufweisen.

10. Ball nach einem der Ansprüche 8 und 9, dadurch gekennzeichnet, daß zwei Reihen (40, 41, 42, 43, 45, 46, 47, 48, 50, 51, 52, 65, 66, 67, 68, 70, 71, 72, 73, 75, 76, 77, 78, 110, 111, 112, 113), die identische Positionen in einer ersten elementaren Oberfläche (22) einnehmen, identisch sind.

11. Ball nach einem der Ansprüche 8 bis 10, dadurch gekennzeichnet, daß die Schnittkreise (44, 49, 54, 69, 74, 79, 80) einer gleichen Reihe (40, 41 42, 43, 45, 46, 47, 48, 50, 51, 52, 65, 66, 67, 68, 70, 71, 72, 73, 75, 76, 77, 78) in einer ersten elementaren Oberfläche (22) den gleichen Durchmesser (D₁, D₂, D₃, D₆, D₇, D₈, D₉) aufweisen.

12. Ball nach Anspruch 11, dadurch gekennzeichnet, daß die Schnittkreise (44, 49, 54, 69, 74, 79, 80) einen Durchmesser (D₁, D₂, D₃, D₆, D₇, D₈, D₉) aufweisen, der um so größer ist, je weiter sie von einem äquatorialen Kreis (18, 19, 20, 21) in einer ersten elementaren Oberfläche (22) entfernt sind.

13. Ball nach einem der Ansprüche 8 bis 10, dadurch gekennzeichnet, daß die Schnittkreise (114, 115) einer gleichen Reihe (110, 111, 112, 113) in einer ersten elementaren Oberfläche (22) unterschiedliche jeweilige Durchmesser (D₁₁, D₁₂) aufweisen.

14. Ball nach Anspruch 13, dadurch gekennzeichnet, daß die zweiten Schnittkreise (115) einen Durchmesser (D₁₂) aufweisen, der kleiner ist als derjenige der ersten Schnittkreise (114), die in der gleichen Reihe (110, 111, 112, 113) liegen.

15. Ball nach einem der Ansprüche 8 bis 14, dadurch gekennzeichnet, daß das Muster außerdem drei Schnittkreise (99, 120, 121) aufweist, die in Reihen (95, 96, 97, 98, 116, 117, 118, 119) verteilt sind, von denen jede zwei äußerste Schnittkreise (99, 120) aufweist, die nahe zu einem jeweiligen diagonalen Kreisbogen (35, 36) liegen.

16. Ball nach Anspruch 15, dadurch gekennzeichnet, daß die dritten Schnittkreise (99, 120, 121) einer gleichen Reihe (95, 96, 97, 98, 116, 117, 118, 119) den gleichen Durchmesser (D₁₂) aufweisen.

17. Ball nach einem der Ansprüche 1 bis 16, dadurch gekennzeichnet, daß sich ein Schnittkreis (80) an der Schnittstelle (55) der diagonalen Kreisbögen (35, 36) in einer ersten elementaren Oberfläche (22) befindet.

18. Ball nach einem der Ansprüche 1 bis 17, dadurch gekennzeichnet, daß wenn man als Mediankreisbogen einer zweiten elementaren Oberfläche (29) einen Kreisbogen (37, 38, 39) definiert, der im Zentrum (13) der Kugel (1) zentriert ist und einen Scheitel (32, 33, 34) des sphärischen gleichseitigen Dreiecks in der Mitte der Seite (26, 27, 28) dieses sphärischen äquilateralen Dreiecks, der diesem Scheitel (32, 33, 34) gegenüberliegt verbindet, sind die Schnittkreise (59, 63, 84, 88, 92, 93) in einer zweiten elementaren Oberfläche (29) gemäß einem Muster verteilt, das aufweist:
- vierte Schnittkreise, die auf den Mediankreisbögen (37, 38, 39) auf identische Weise verteilt sind,
- fünfte Schnittkreise, die in Reihen (56, 57, 58, 60, 61, 62, 81, 82, 83, 85, 86, 87, 89,. 90, 91) verteilt sind, von denen jede gegenseitig zwei vierte Schnittkreise verbindet, die identische Positionen auf den entsprechenden Mediankreisbögen (37, 38, 39) einnehmen.

19. Ball nach Anspruch 18, dadurch gekennzeichnet, daß zwei vierte Schnittkreise, die identische Positionen auf den entsprechenden Mediankreisbögen (37, 38, 39) in einer zweiten elementaren Oberfläche (29) einnehmen, den gleichen Durchmesser (D₄, D₅. D₁₀) aufweisen.

20. Ball nach einem der Ansprüche 18 und 19, dadurch gekennzeichnet, daß zwei Reihen (56, 57, 58, 60, 61, 62, 81, 82, 83, 85, 86, 87, 89, 90, 91), die identische Positionen in einer zweiten elementaren Oberfläche (29) einnehmen, identisch sind.

21. Ball nach einem der Ansprüche 18 bis 20, dadurch gekennzeichnet, daß die Schnittkreise (59, 63, 84, 88, 92, 93) einer gleichen Reihe (56, 57, 58, 60, 61, 62, 81, 82, 83, 85, 86, 87, 89, 90, 91) in einer zweiten elementaren Oberfläche (29) den gleichen Durchmesser (D₄, D₅, D₁₀) aufweisen.

22. Ball nach einem der Ansprüche 18 bis 21, dadurch gekennzeichnet, daß sich ein Schnittkreis (93) auf der Schnittstelle (64) der Mediankreisbögen (37, 38, 39) in einer zweiten elementaren Oberfläche (29) befindet.

23. Ball nach einem der Ansprüche 18 bis 22, dadurch gekennzeichnet, daß die Schnittkreise (59, 63, 84, 88, 92, 93) den gleichen Durchmesser (D₄, D₅, D₁₀) in einer zweiten elementaren Oberfläche (29) aufweisen.

24. Ball nach einem der Ansprüche 1 bis 23, dadurch gekennzeichnet, daß die Schnittkreise (44, 49, 54, 59, 63, 69, 74, 79, 80, 84, 88, 92, 93, 99, 114, 115, 120, 121), die jeweils den ersten elementaren Oberflächen (22) und den zweiten elementaren Oberflächen (29) entsprechen, im wesentlichen unterschiedliche Durchmesser (D₁ bis D₁₂) und/oder im wesentlichen unterschiedliche Unterteilungen jeweils in den ersten und zweiten elementaren Oberflächen (22, 20) aufweisen.

25. Ball nach einem der Ansprüche 1 bis 23, dadurch gekennzeichnet, daß die Schnittkreise (44, 49, 52, 59, 63), die den ersten und zweiten elementaren Oberflächen (22, 29) entsprechen, im wesentlichen benachbarte Durchmesser (D₁ bis D₅) und im wesentlichen gleichförmige Verteilungen in den ersten und zweiten elementaren Oberflächen (22, 29) aufweisen.

## Claims

1. Golf ball, of the type having a peripheral face (2, 102, 202, 302) having the general shape of a sphere (1) and a plurality of hollows made in the said peripheral face (2, 102, 202, 302) and defining by their intersections with the latter intersection circles (44, 49, 54, 59, 63, 69, 74, 79, 80, 84, 88, 92, 93, 94, 99, 114, 115, 120, 121) distributed over the said peripheral surface (2, 102, 202, 302) according to a repetitive pattern determined by a subdivision of the said peripheral face (2, 102, 202, 302) along circular arcs (18, 19, 20, 21) centred at the centre (13) of the sphere (1) and determined as a function of a cube (4) inscribed in the sphere (1), so as to define elementary surfaces (22, 29) in which the said intersection circles (44, 49, 54, 59, 63, 69, 74, 79, 80, 84, 88, 92, 93, 94, 99, 114, 115, 120, 121) are essentially distributed, characterised in that the said subdivision is made according to four equatorial circles (18, 19, 20, 21), each of which has its axis aligned along an axis (14, 15, 16, 17) passing through two diametrically opposite vertices (5, 6, 7, 8, 9, 10, 11, 12) of the cube (4) so as to define six first identical elementary surfaces (22) in the shape of a regular spherical polygon with four sides (23, 24, 25, 26) and eight identical elementary second surfaces (29) in the shape of an equilateral spherical triangle, in that the said intersection circles (44, 49, 54, 59, 63, 69, 74, 79, 80, 84, 88, 92, 93, 94, 99, 114, 115, 120, 121) are essentially distributed inside the said first and second elementary surfaces (22, 29), and in that, if a diagonal circular arc of a first elementary surface (22) is defined as being a circular arc (36, 36) [sic] centred at the centre (13) of the sphere (1) and joining two opposite vertices (30, 31, 32, 32) of the said regular spherical polygon, some (44, 49, 54, 69, 74, 79, 80, 114) of the said intersection circles (44, 49, 54, 59, 63, 69, 74, 79, 80, 84, 88, 92, 93, 94, 99, 114, 115, 120, 121) are disposed on the said diagonal circular arcs (35, 36).

2. Ball according to Claim 1, characterised in that at least one given equatorial circle (21), among the said equatorial circles (18, 19, 20, 21),cuts no intersection circle (44, 49, 54, 59, 63, 69, 74, 79, 80, 84, 88, 92, 93, 94, 99, 114, 115, 120, 121) and subdivides each of the other said equatorial circles (18, 19, 20, 21) into two equatorial circular arcs (18a and 18b, 19a and 19b, 20a and 20b), each of which corresponds to one of the two hemispheres (2a, 2b) defined by the said given equatorial circle (21).

3. Ball according to Claim 2, characterised in that the equatorial circular arcs (18a, 19a, 20a) of one (2a) of the hemispheres are angularly offset with respect to the respectively corresponding equatorial circular arcs (18b, 19b, 20b) of the other (2b) of the hemispheres, by the same value around the axis (17) of the said given equatorial circle (21).

4. Ball according to either of Claims 2 and 3, characterised in that none of the said equatorial circles (18, 19, 20, 21) cuts an intersection circle (44, 49, 54, 59, 63, 69, 74, 79, 80, 84, 88, 92, 93, 94, 99, 114, 115, 120, 121).

5. Ball according to either of Claims 2 or 3, characterised in that it has one intersection circle (94) around one at least of the points of intersection (33) of the said equatorial circular arcs (18a, 19a, 20a, 18b, 19b, 20b).

6. Ball according to either of Claims 2 or 3, characterised in that it has one intersection circle (94) around each of the points of intersection (33) of the said equatorial circular arcs (18a, 19a, 20a, 18b, 19b, 20b), respectively.

7. Ball according to any one of Claims 1 to 6, characterised in that the intersection circles (44, 49, 54, 59, 63, 69, 74, 79, 80, 84, 88, 92, 93, 99, 114, 115, 120, 121) are distributed according to an identical pattern in identical elementary surfaces (22, 29).

8. Ball according to any one of Claims 1 to 7, characterised in that the said intersection circles (44, 49, 54, 69, 74, 79, 80, 99, 114, 115, 120, 121) are distributed, in a first elementary surface (22), according to a pattern comprising:
- first intersection circles distributed identically on the said diagonal circular arcs (35, 36,),
- second intersection circles distributed in rows (40, 41, 42, 43, 45, 46, 47, 48, 50, 51, 52, 65, 66, 67, 68, 70, 71, 72, 73, 75, 76, 77, 78, 110, 111, 112, 113), each of which mutually connects two first intersection circles occupying identical positions on the said corresponding diagonal circular arcs (35, 36).

9. Ball according to Claim 8, characterised in that two first intersection circles occupying identical positions on the said corresponding diagonal circular arcs (35, 36), in a first elementary surface (22), have the same diameter (D₁, D₂, D₃, D₆ D₇, D₈, D₉, D₁₁).

10. Ball according to either of Claims 8 or 9, characterised in that two rows (40, 41, 42, 43, 45, 46, 47, 48, 50, 51, 52, 65, 66, 67, 68, 70, 71, 72, 73, 75, 76, 77, 78, 110, 111, 112, 113) occupying identical positions in a first elementary surface (22) are identical.

11. Ball according to any one of Claims 8 to 10, characterised in that the intersection circles (44, 49, 54, 69, 74, 79, 80) of the same row (40, 41, 42, 43, 45, 46, 47, 48, 50, 51, 52, 65, 66, 67, 68, 70, 71, 72, 73, 75, 76, 77, 78), in a first elementary surface (22), have the same diameter (D₁, D₂, D₃, D₆, D₇, D₈, D₉).

12. Ball according to Claim 11, characterised in that the intersection circles (44, 49, 54, 69, 74, 79, 80) have a diameter (D₁, D₂, D₃, D₆, D₇, D₈, D₉) which is larger by as much as they are distant from an equatorial circle (18, 19, 20, 21) in a first elementary surface (22).

13. Ball according to any one of Claims 8 to 10, characterised in that the intersection circles (114, 115) of the same row (110, 111, 112, 113), in a first elementary surface (22), have different respective diameters (D₁₁, D₁₂).

14. Ball according to Claim 13, characterised in that the second intersection circles (115) have a diameter (D₁₂) which is less than that of the first intersection circles (114) situated in the same row (110, 111, 112, 113).

15. Ball according to any one of Claims 8 to 14, characterised in that the said pattern furthermore comprises third intersection circles (99, 120, 121) distributed in rows (95, 96, 97, 98, 116, 117, 118, 119), each of which comprises two extreme intersection circles (99, 120) adjacent to a respective diagonal circular arc (35, 36).

16. Ball according to Claim 15, characterised in that the third intersection circles (99, 120, 121) of the same row (95, 96, 97, 98, 116, 117, 118, 119) have the same diameter (D₁₂).

17. Ball according to any one of Claims 1 to 16, characterised in that one intersection circle (80) is disposed at the intersection (55) of the said diagonal circular arcs (35, 36) in a first elementary surface (22).

18. Ball according to any one of Claims 1 to 17, characterised in that, if a median circular arc of a second elementary surface (29) is defined as being a circular arc (37, 38, 39) centred at the centre (13) of the sphere (1) and joining a vertex (32, 33, 34) of the said spherical equilateral triangle to the middle of the side (26, 27, 28) of this spherical equilateral triangle which is opposite this vertex (32, 33, 34), the said intersection circles (59, 63, 84, 88, 92, 93) are distributed, in a second elementary surface (29), according to a pattern comprising:
- fourth intersection circles distributed identically on the said median circular arcs (37, 38, 39),
- fifth intersection circles distributed in rows (56, 57, 58, 60, 61, 62, 81, 82, 83, 85, 86, 87, 89, 90, 91) each of which mutually connects two fourth intersection circles occupying identical positions on the said corresponding median circular arcs (37, 38, 39).

19. Ball according to Claim 18, characterised in that two fourth intersection circles occupying identical positions on the said corresponding median circular arcs (37, 38, 39), in a second elementary surface (29), have the same diameter (D₄, D₅, D₁₀).

20. Ball according to either of Claims 18 or 19, characterised in that two rows (56, 57, 58, 60, 61, 62, 81, 82, 83, 85, 86, 87, 89, 90, 91) occupying identical positions in a second elementary surface (29) are identical.

21. Ball according to any one of Claims 18 to 20, characterised in that the intersection circles (59, 63, 84, 88, 92, 93) of the same row (56, 57, 58, 60, 61, 62, 81, 82, 83, 85, 86, 87, 89, 90, 91), in a second elementary surface (29), have the same diameter (D₄, D₅, D₁₀).

22. Ball according to any one of Claims 18 to 21, characterised in that one intersection circle (93) is disposed at the intersection (64) of the said median circular arcs (37, 38, 39) in a second elementary surface (29).

23. Ball according to any one of Claims 18 to 22, characterised in that the said intersection circles (59, 63, 84, 88, 92, 93) have the same diameter (D₄, D₅, D₁₀) in a second elementary surface (29).

24. Ball according to any one of Claims 1 to 23, characterised in that the intersection circles (44, 49, 54, 59, 63, 69, 74, 79, 80, 84, 88, 92, 93, 99, 114, 115, 120, 121) corresponding respectively to the first elementary surfaces (22) and to the second elementary surfaces (29) have substantially different diameters (D₁ to D₁₂) and/or substantially different distributions respectively in the first and second elementary surfaces (22, 29).

25. Ball according to any one of Claims 1 to 23, characterised in that the intersection circles (44, 49, 52, 59, 63) corresponding to the first and second elementary surfaces (22, 29) have substantially similar diameters (D₁ to D₅) and substantially uniform distributions in the said first and second elementary surfaces (22, 29).
